# EUROPEAN PATENT APPLICATION

(11) **EP 2 230 618 A1**
(43) Date of publication of application: **22.09.2010**
(21) Application number: 10002768.9
(22) Date of filing: 16.03.2010
(51) Int. Cl.: G06F 21/00

(54) **Program verification apparatus and its method**

(30) Priority: 17.03.2009 JP 2009064531
(71) Applicant: NEC Electronics Corporation, Kawasaki, Kanagawa 211-8668 (JP)
(72) Inventor: Morikawa, Takeshi, Yokohama Kanagawa 221-0056 (JP)
(74) Representative: Glawe, Delfs, Moll

(57) **Abstract**

To provide a program verification apparatus capable of detecting illegal conduct most of the time. When program data is to be stored in a security data storage, a first checksum value is obtained by performing CRC calculation on the program data. Further, a second checksum value is obtained by performing CRC calculation on program data transferred to the security data storage. Program verification is performed by comparing these checksum values. A loop number logic 700 causes CRC calculation to be performed at least twice, and determines the number of its loops. A calculation order logic 800 changes calculation order of CRC calculation for each loop of the CRC calculation.

## Description

### INCORPORATION BY REFERENCE

This application is based upon and claims the benefit of priority from Japanese patent application No. 2009-064531, filed on March 17, 2009, the disclosure of which is incorporated herein in its entirety by reference.

### BACKGROUND

### 1. Field of the Invention

The present invention relates to a program verification apparatus and its method. For example, the present invention relates to the field of digital TV and the like that handles digital video contents.

### 2. Description of Related Art

In the field of digital TV and the like that handles digital video contents, the transition from analog broadcasting to digital broadcasting has been rapidly becoming widespread over the world in recent years. In the digital broadcasting, the data is encrypted for the purpose of preventing illegal viewing and illegal copying. However, such encryption is often cracked by illegal conduct, and therefore broadcasting agents are forced to change their encryption schemes to stronger ones. As a result of this, the demand for improvement in security robustness to prevent tampering not only for the contents but also for the semiconductor equipment that handles those contents has grown.

Fig. 4 is a functional block diagram schematically representing a smart card disclosed in Patent document 1 (Japanese Unexamined Patent Application Publication No. 2007-183937). The smart card 1000 includes a control unit 100, an interface block 200, a RAM 300, a ROM 400, and a security data storage 500. The control unit 100 controls the overall operation of the smart card 1000. The RAM 300 serves as a work memory, and is used to temporarily store data that is to be stored in or is read out from the security data storage 500. The security data storage 500 is used to store data that needs to be secured by the control of the control unit 100 (e.g., financial information).

Note that the data that is stored in the security data storage 500 of the smart card 1000 requires high security. Examples of the data to be stored include financial information. Further, when data is to be programmed in the security data storage 500 of the smart card 1000, it is necessary to verify whether the data is written in correctly or not. That is, it is necessary to prevent data that was illegally manipulated by an external attack or the like from being programmed. As for the program verification, a CRC (Cyclic Redundancy Check) scheme has been known.

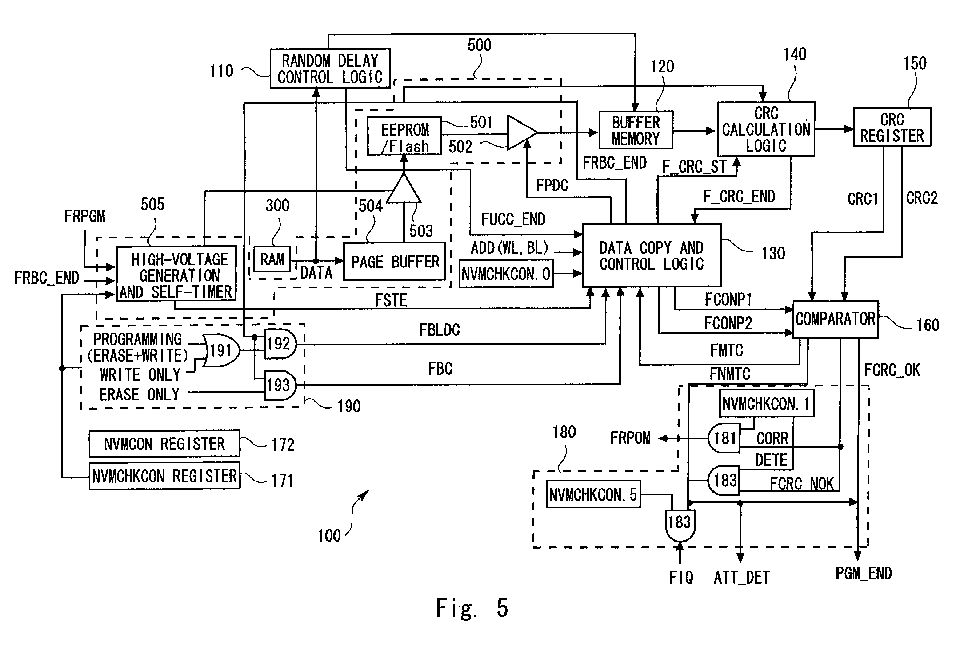

Fig. 5 is a functional block diagram showing more detailed configuration of the control unit. The control unit 100 includes a random delay control logic 110, a buffer memory 120, a data copy-and-control logic 130, a CRC calculation logic 140, a CRC register 150, a comparator 160, registers 171 and 172, a correction/detection control logic 180, and a signal generator 190.

Program data is transferred from the RAM 300 to the page buffer 504 of the security data storage 500. After the program data is transferred from the RAM 300 to the page buffer 504, the random delay control logic 110 causes this program data to be copied to the buffer memory 120. The random delay control logic 110 generates a flag signal FUDC_END when all the program data stored in the RAM 300 have been copied to the buffer memory 120. The activation of the flag signal FUDC_END indicates that all the program data stored in the RAM 300 have been copied to the buffer memory 120.

The CRC calculation logic 140 receives a control signal F_CRC_ST from the data copy-and-control logic 130. Upon receiving this control signal F_CRC_ST, the CRC calculation logic 140 performs a CRC calculation operation on the data stored in the buffer memory 120. At the same time, when the CRC calculation logic 140 receives the control signal F_CRC_ST, it reads out data directly from an array 501 of the security data storage 500 and performs a CRC calculation operation on the read-out data. The result value calculated by the CRC calculation logic 140 (i.e., each result value corresponds to 2-byte checksum value) is stored in the CRC register 150. The CRC register 150 stores two 2-byte checksum values obtained through two CRC calculation processes. The CRC calculation logic 140 generates a flag signal FCRC_END every time a CRC calculation operation has been completed.

The comparator 160 receives a control signal FCOMP1 from the data copy-and-control logic 130. Upon receiving the control signal FCOMP1, the comparator 160 compares data stored in the page buffer 504 with data stored in the buffer memory 120. The comparator 160 activates one of a flag signal FMTC and a flag signal FNMTC as a comparison result. The activation of the flag signal FMTC indicates that the data stored in the page buffer 504 matches with the data stored in the buffer memory 120. The activation of the flag signal FNMTC indicates that the data stored in the page buffer 504 does not match with the data stored in the buffer memory 120.

As explained hereinafter, when the flag signal FNMTC is activated, it means that the data loaded into the page buffer 504 was illegally manipulated by an external attack, and therefore the program operation is terminated.

Further, the comparator 160 also receives a control signal FCOMP2 from the data copy-and-control logic 130. Upon receiving the control signal FCOMP2, the comparator 160 compares result values (CRC1, CRC2) stored in the CRC resister 150, and generates a flag signal FCRC_OK or FCRC_NOK as a comparison result. The flag signal FCRC_NOK indicates that the result values (CRC1, CRC2) stored in the CRC register 150 do not match. The flag signal FCRC_OK indicates that the result values (CRC1, CRC2) stored in the CRC register 150 match.

The register 171, which is used to store the control information of the security data storage 500, stores high-voltage activation information, self-timer activation information, instruction information, and the like. The register 172 is an 8-bit register and used to store verification information for the writing operation of the security data storage 500.

Note that the [0]-bit is a verification on/off control bit of the security data storage 500. Further, the logic value "0" indicates that a verification function is turned off, and the logic value "1" indicates that a verification function is turned on. The initial value is a logic value "0".

The [1]-bit is an error correction/detection selection information bit. Further, the logic value "0" indicates that an error detection function is selected, and the logic value "1" indicates that an error correction function is selected.

The [2]-bit is an external attack detection flag bit. When the [2]-bit is set to "0", it indicated that the program data has not been illegally manipulated by an external attack. Further, when the [2]-bit is set to "1", it indicated that the program data was illegally manipulated by an external attack.

The [5]-bit is an interrupt occurrence control bit. Further, the logic value "0" indicates that an interrupt occurrence function is turned off, and the logic value "1" indicates that an interrupt occurrence function is turned on.

The [6]-bit is set as an error detection flag bit by a microprocessor or a CPU (not shown) of the control unit 100. Further, the logic value "0" indicates that no error has been detected, and the logic value "1" indicates that an error was detected.

Note that the [5]-bit has effective information only when the [1]-bit is set to a logic value "0". That is, in the case where the [1]-bit is set to a logic value "0", when the [5]-bit is set to a logic value "1 ", an interrupt can occur. In the case where the [1]-bis is set to a logic value "1", no interrupt occurs even when an error is detected. In the case where the error detection function is selected (the [1]-bit is set to a logic value "0"), the [6]-bit is set when an error occurs, and is cleared by a high-voltage activation signal that is activated next. The remaining [3], [4] and [7] bits are reserved bits.

Next, the correction/detection control logic 180 generates a program end signal PGM_END, an external attack detection signal ATT_DET, a re-program signal FRPGR, and an interrupt signal FIQ in response to information stored in the register 172 and flag signals FNMTC, FCRC_NOK and FCRC_OK. For example, when a flag signal FNMTC is activated, the correction/detection control logic 180 activates the program end signal PGM_END and the external attack detection signal ATT_DET. Further, the correction/detection control logic 180 generates an interrupt signal FIQ based on whether the [5]-bit of the register 172 is set or not.

When the flag signal FCRC_OK is activated, the correction/detection control logic 180 activates the program end signal PGM_END. This action causes the program procedure to be terminated. When the flag signal FCRC_NOK is activated, the correction/detection control logic 180 activates the re-program signal FRPGR or the program end signal PGM_END and the interrupt signal FIQ based on whether the [1]-bit of the register 172 is set or not.

The signal generator 190 activates one of the flag signals FBLDC and FBC in response to instruction information stored in the register 171 and the control signal FRBC_END from the data copy-and-control logic 130. For example, when an instruction notifying of an erasing-and-writing operation or a writing operation is set in the register 171, the signal generator 190 generates a flag signal FBLDC in response to the activation of the control signal FRBC_END. When an instruction notifying of an erasing operation is set in the register 171, the signal generator 190 generates a flag signal FBC in response to the activation of the control signal FRBC_END.

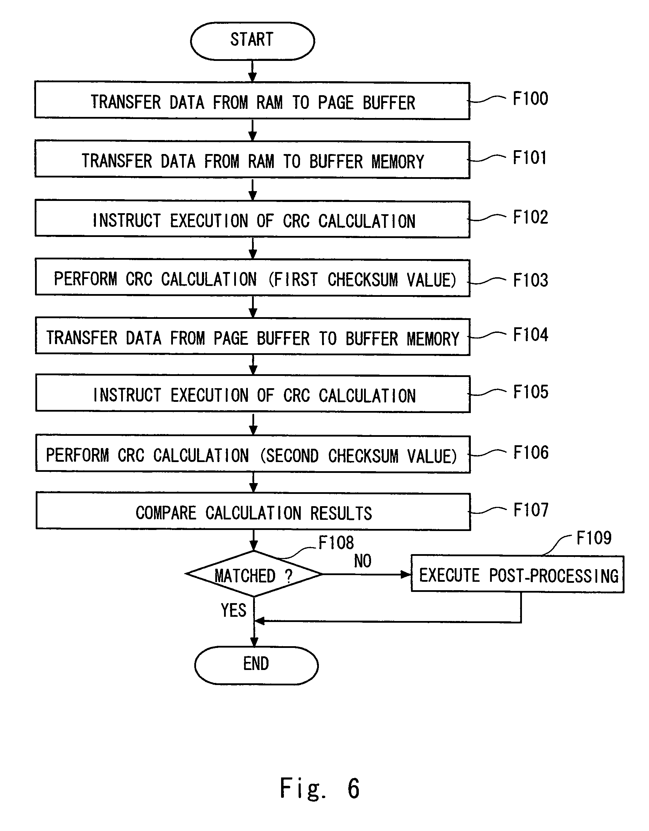

Fig. 6 is a flowchart of program verification by a smart card control unit in related art. The control unit 100 starts the operation by an external device, and transfers program data from the RAM 300 to the page buffer 504 (step F100). Then, the control unit 100 determines whether or not the program data in the page buffer 504 was illegally manipulated by an external attack, and stores the program data of the page buffer 504 in a selected page of the security data storage 500 based on the determination result.

After the program data is transferred to the page buffer 504, the random delay control logic 110 transfers the program data from the RAM 300 to the buffer memory 120 (step F101).

After the program data is transferred to the buffer memory 120, the data copy-and-control logic 130 instructs the CRC calculation logic 140 to perform CRC calculation in order to calculate a first checksum value for the program data of the buffer memory 120 (step F102). The CRC calculation logic 140 calculates the first checksum value by performing CRC calculation for the program data of the buffer memory 120 (step F103).

After the first checksum value is calculated, the data copy-and-control logic 130 transfers the program data of the page buffer 504 to the buffer memory 120 (step F104). After the program data is transferred to the buffer memory 120, the data copy-and-control logic 130 instructs the CRC calculation logic 140 to perform CRC calculation in order to calculate a second checksum value for the program data of the buffer memory 120 (step F105).

The CRC calculation logic 140 calculates the second checksum value by performing CRC calculation for the program data of the buffer memory 120 (step F106). After the second checksum value is calculated, the comparator 160 compares the first checksum value with the second checksum value (step F107). When the comparison result turns out to be matching, the process is finished, whereas when it turns out to be un-matching, the comparator 160 notifies the correction/detection control logic 180 (step F108). The correction/detection control logic 180 generates a program end signal, and the process is finished (step F109).

Further, Patent document 2 (Japanese Unexamined Patent Application Publication No. 2000-4170) discloses a correction check method to correct an error that occurs when data is read out from a record medium, and to check whether or not an error exists in the result of the error correction process. The correction check method disclosed in Patent document 2 is performed in the following procedure. Firstly, check calculation is performed on data containing an error detection code corresponding to a PI direction (a row direction of the sector) by using the error detection code to obtain a first sample value. Next, an error correction is performed in the PI direction of the data block. Next, check calculation is performed on the corrected value obtained by the error correction in the PI direction to generate a second sample value. The obtained first and second sample values are compared with each other to generate a first check value. Further, an error correction is performed on the base data, on which the error correction was performed in the PI direction, in a PO direction that is different from the PI direction (a column direction extending across sectors). Check calculation is performed on the corrected value, which was obtained by the error correction in the PO direction, along the PI direction to generate a third sample value. Then, the obtained first and third sample values are compared with each other to generate a second check value that is used to check the error correction in the aforementioned second direction (PO direction). Note that in Patent document 2, in order to shorten the time required for the correction check by reducing the number of times the base data is read out, when the third sample value is to be obtained, sorting is performed to facilitate the calculation along the PI direction before the check calculation is performed in the PI direction.

### SUMMARY

The present inventors have found a problem that, in Patent document 1, CRC calculation is performed once for each of program data in the RAM and program data in the page buffer, and then both the CRC calculation results are compared with each other to determine whether or not tampering was made in the page buffer. However, CRC calculation is performed only once for the same program. Therefore, if the generator polynomial is leaked out, a unique CRC calculation result can be obtained by manipulating a part of the program (bit length of the generator polynomial). Therefore, the above-described program verification method in related art has a problem that programs stored in the security data storage 500 are vulnerable to tampering.

Further, in the method disclosed in Patent document 2, check calculation is performed each time before the error corrections, after the error correction in the PI direction, and after the error correction in the PO direction. The process like this can check whether an error correction process is performed correctly or not. However, in Patent document 2, since check calculation is performed before and after the data correction, the data on which calculation is performed are different in the first place. Further, the direction of the check calculation is always fixed in the PI direction. Therefore, even in the correction check method of Patent document 2, if the generator polynomial is leaked out and programs are thereby tampered, it is in principle impossible to check such tampering.

A first exemplary aspect of the present invention is a program verification apparatus that performs program verification by performing CRC calculation, including: a loop number logic that causes the CRC calculation to be performed at least twice and determines a number of its loops; and a calculation order logic that changes calculation order of CRC calculation for each loop of the CRC calculation.

Another exemplary aspect of the present invention is a program verification method of performing program verification by performing CRC calculation, including: causing the CRC calculation to be performed at least twice; determining a number of loops of the CRC calculation; and changing calculation order of CRC calculation for each loop of the CRC calculation.

With a configuration like this, it is possible to configure such that CRC calculation results are different between the first loop and the second and subsequent loop(s) because of the difference in the calculation order, and that a correlation exists among each CRC calculation result because the CRC calculation is performed on the same object. In this way, even if the generator polynomial is leaked out and a part of the program (bit length of the generator polynomial) is thereby tampered, program verification in accordance an exemplary aspect of the present invention can detect illegal conduct such as tampering most of the time, and thus making illegal manipulation impossible.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a circuit diagram of program verification;
Fig. 2 is a flowchart of program verification;
Fig. 3 shows a configuration example of a buffer memory;

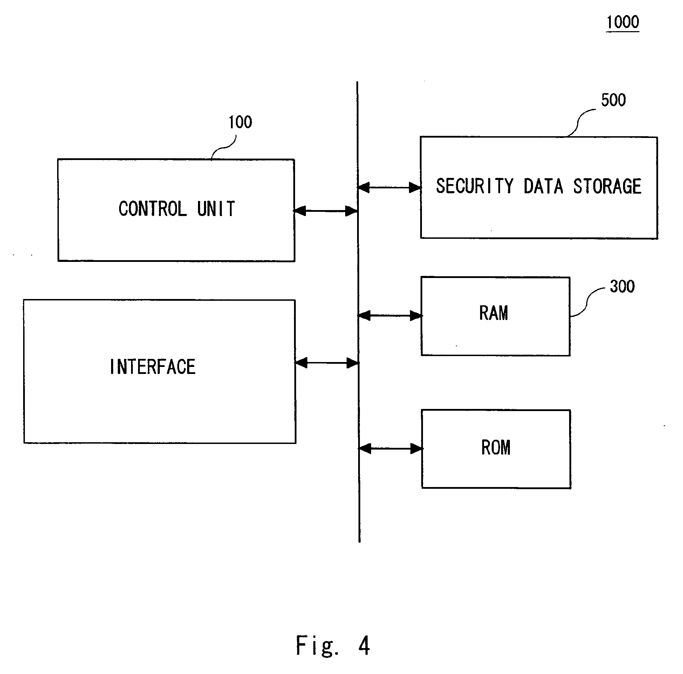

Fig. 4 shows a smart card in related art;
Fig. 5 is a circuit diagram of program verification by a smart-card control unit in related art; and
Fig. 6 is a flowchart of program verification by a smart-card control unit in related art.

### DETAILED DESCRIPTION OF THE EMPLARY EMBODIMENTS

Exemplary embodiments of the present invention are explained hereinafter with reference to the drawings.

### [First exemplary embodiment]

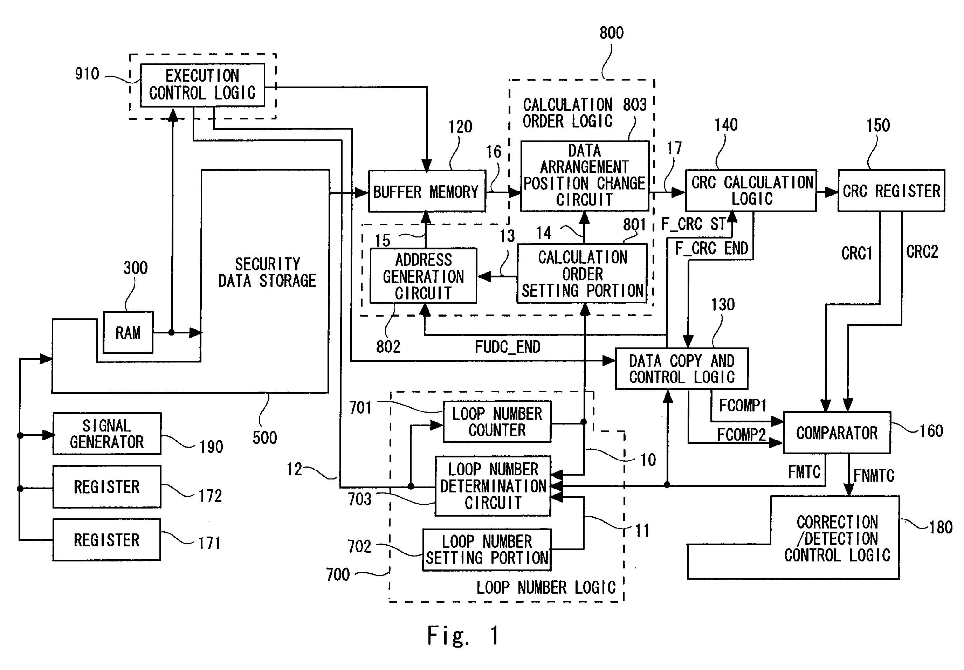

Fig. 1 is a circuit diagram of a program verification apparatus. In the figure, the same signs are assigned to the same portions as those of Fig. 5, and their explanation is omitted. Fig. 1 has such a configuration that a loop number logic 700 and a calculation order logic 800 are added, and the random delay control logic 110 is replaced by an execution control logic 910 in Fig. 5.

The loop number logic 700 includes a loop number counter 701, a loop number setting portion 702, and a loop number determination circuit 703.

The loop number counter 701 counts the number of calculation loops. The counting of the number of loops is implemented by counting re-execution instructions from the loop number determination circuit 703. The details of this point are explained later. Then, the loop number counter 701 outputs a loop number signal 10 indicating the number of calculation loops to the loop number determination circuit 703 and a calculation order setting portion 801.

The number of times for which the calculation loop should be repeated is set in advance in the loop number setting portion 702. The loop number setting portion 702 provides the set loop number to the loop number determination circuit 703 through a loop number setting signal 11.

The loop number determination circuit 703 receives a signal FMTC indicating a matching comparison result of checksum values from the comparator 160, and outputs a calculation re-execution signal 12 to the loop number counter 701 and the execution control logic 910.

The calculation order logic 800 includes a calculation order setting portion 801, an address generation circuit 802, and a data arrangement position change circuit 803. The calculation order setting portion 801 outputs an address order signal 13 and a data order signal 14 to the address generation circuit 802 and the data arrangement position change circuit 803 respectively. A calculation order parameter(s) with which CRC calculation is performed for each loop is set in advance in the calculation order setting portion 801. The calculation order parameter is composed of address order and data order. The address order is composed of a start address, an end address, and an address update procedure.

The address generation circuit 802 receives a signal F_CRC_ST indicating the execution start of CRC calculation from the data copy-and-control logic 130, and also receives an address order signal 13 from the calculation order setting portion 801. Further, the address generation circuit 802 outputs an address signal 15 indicating a read address to the buffer memory 120.

The data arrangement position change circuit 803 receives a read data signal 16, which is the data read out from the buffer memory 120. Further, the data arrangement position change circuit 803 outputs a calculation data signal 17, which is data for which arrangement positions are changed, to the CRC calculation logic 140.

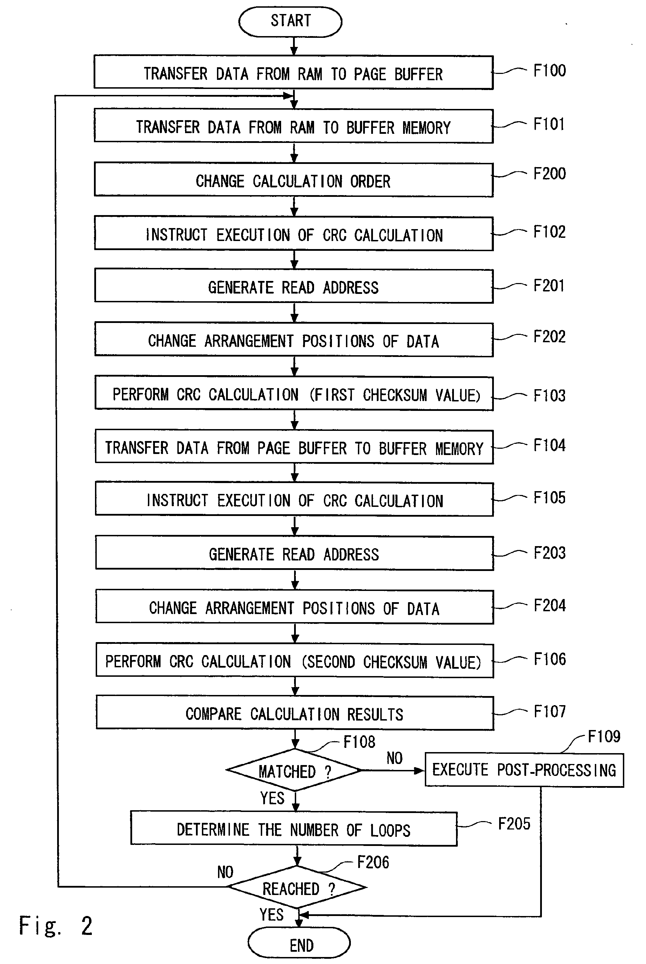

Fig. 2 is a flowchart of a program verification method in accordance with this exemplary embodiment of the present invention. Operations of Fig. 1 are explained hereinafter with reference to Fig. 2. Note that the same signs are assigned to the same portions as those of Fig. 6, and their explanation is omitted.

In this exemplary embodiment, CRC calculation performed from the step F101 1 to the step F206 is repeated in the form of loop. In this process, calculation order is changed for each loop (step F200).

In this exemplary embodiment, the calculation order is changed after the steps F100 and F101 and before the execution of the CRC calculation is instructed (step F200). The calculation order setting portion 801 receives a loop number signal 10 from the loop number counter 701. Then, it reads out a calculation order parameter(s) composed of address order and data order that are set for each loop, and changes the address order and the data order to the read-out values (step F200). The calculation order setting portion 801 outputs an address order signal 13 and a data order signal 14 to the address generation circuit 802 and the data arrangement position change circuit 803 respectively.

Next, steps up to the CRC calculation step for obtaining a first checksum value (step F103) are explained hereinafter. The address generation circuit 802 starts the operation in response to a signal F_CRC_ST indicating the execution start of CRC calculation. The address generation circuit 802 generates a read address of the buffer memory 120 in accordance with the address order signal 13. The read address starts from the start address, is updated whenever data is read out from the buffer memory 120 in accordance with the address update procedure, and ends when it becomes the end address (step F201). The address is output as an address signal 15 to the buffer memory 120.

The data arrangement position change circuit 803 changes the arrangement positions of data bits of the read data signal 16 read out from the buffer memory 120 in accordance with the data order signal 14. The data arrangement position change circuit 803 outputs the changed data as a calculation data signal 17 to the CRC calculation logic 140 (step F202). The CRC calculation logic 140 performs the CRC calculation (step F103).

Next, the operations of CRC calculation to obtain a second checksum value are the same as those of the CRC calculation to obtain the first checksum value, and therefore detailed explanation is omitted.

Note that in the CRC calculation to obtain a second checksum value, address generation by the address generation circuit 802 (step F203) and data arrangement position change by the data arrangement position change circuit 803 (step F204) correspond to the steps F201 and F202, respectively, which are the steps to obtain the first checksum value.

The obtained checksum values are transmitted to the comparator 160 through the CRC register 150 and compared in the comparator 160 (step F107).

Operations to determine the number of loops are explained hereinafter. When they are matched (step F 108: YES), the comparator 160 outputs a signal (FMTC) to the loop number determination circuit 703. When the loop number determination circuit 703 receives a signal FMTC indicating a matching comparison result of checksum values from the comparator 160, the loop number determination circuit 703 determines whether or not the number of loops of the CRC calculation has reached a predetermined number by comparing the calculation loop number signal 10 with the calculation loop number setting signal 11 (step F205). When it has reached the predetermined number (step F206: YES), the loop number determination circuit 703 finishes the process, whereas when it has not reached the predetermined number (step F206: NO), the loop number determination circuit 703 outputs a CRC calculation re-execution signal 12 to continue the CRC calculation. Note that the loop number counter 701 receives the re-execution signal 12 and updates the number of loops.

In the CRC calculation in the second loop, the calculation order setting portion 801 changes, in a step F200, the calculation order of the CRC calculation according to the current number of loops (step F200). In this way, the calculation order in the CRC calculation in the second loop is changed from the calculation order in the first loop. Other operations are similar to those of the CRC calculation in the first loop.

This exemplary embodiment of the present invention includes a loop number logic 700 that determines the number of loops of the CRC calculation, a calculation order logic 800 that changes the calculation order for each loop of the CRC calculation, and an execution control logic 910. The loop number logic 700 makes it possible to perform CRC calculation for multiple times, and the calculation order logic 800 makes it possible to generate an address for the memory 120 and to rearrange the read-out data. As a result, it is possible to configure such that the CRC calculation results are different between a CRC calculation result in the first loop and a CRC calculation result in the subsequent loop(s) because of the change in the calculation order, and that a correlation exists among each CRC calculation result because the CRC calculation is performed on the same object. Therefore, in accordance with this exemplary embodiment, even if the generator polynomial is leaked out, tampering on a part of the program (bit length of the generator polynomial) is still substantially impossible.

With regard to the configuration of the buffer memory and the calculation order in accordance with this exemplary embodiment, operations are explained hereinafter by using specific examples. For the sake of explanation, the following assumptions are made. As for the configuration of the buffer memory 120, a memory size specified by a bit width and a word number, and an address range are defined by way of example. In this example, 32 bytes of 8 words with a 32-bit width and an address range from 0 to 7 are defined by way of example.

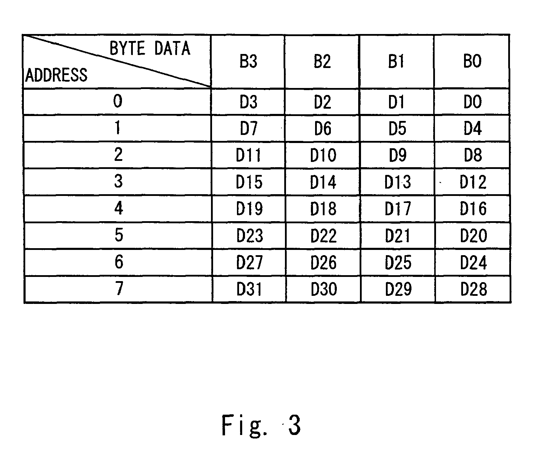

Fig. 3 is a configuration example of the buffer memory 120 defined above. In Fig. 3, D0 to D31 represent byte data corresponding to the addresses 0 to 7. Data at address 0 is 32-bit data composed of byte data D3, D2, D1 and D0. Further, data at addresses 1 to 6 are also configured in a similar manner as shown in Fig. 3. Note that data at address 7 is 32-bit data composed of byte data D31, D30, D29 and D28.

As for the generator polynomial, a data bit width that becomes an object to be calculated and to be input to the CRC calculation logic 140, a bit width of CRC data, and a bit width of CRC data output from the CRC calculation logic 140 are defined by way of example. Assumptions are made that: the target data width is 8 bits; CRC32 (32 bits) is input; and CRC32 (32 bits) is output.

The set number of loops of the CRC calculation is assumed to be twice.

As for the CRC1 calculation address order, a start address of the buffer memory from which the CRC calculation in the first loop starts, and an end address of the buffer memory at which the CRC calculation ends are defined by way of example. An address 0 is defined as the start address and an address 7 is defined as the end address by way of example. As for the address update procedure, the address is assumed to be incremented by two. Further, only when the address is 6, the next address becomes 1.

As for the CRC2 calculation address order, a start address of the buffer memory from which the CRC calculation in the second loop starts, and an end address of the buffer memory at which the CRC calculation ends are defined by way of example. An address 1 is defined as the start address and an address 6 is defined as the end address by way of example. As for the address update procedure, the address is assumed to be incremented by two. Further, only when the address is 7, the next address becomes 0.

As the CRC1 calculation data order, the order according to which the arrangement positions of data read out from the buffer memory 120 in the first loop are changed is defined by way of example. The arrangement positions of data (32 bits) read out from the buffer memory 120 are assumed to be rearranged from B3, B2, B1, B0 to B2, B3, B0, B1.

As the CRC2 calculation data order, the order according to which the arrangement positions of data read out from the buffer memory 120 in the second loop are changed is defined by way of example. The arrangement positions of data (32 bits) read out from the buffer memory 120 are assumed to be rearranged from B3, B2, B1, B0 to B3, B1, B2, B0.

Note that each of the above-mentioned arrangement potions B3, B2, B1 and B0 represents byte data. When each of the arrangement potions is expressed by a bit position, the arrangement potion B3 is bit positions 31 bit to 24 bit; the arrangement potion B2 is bit positions 23 bit to 16 bit; the arrangement potion B1 is bit positions 15 bit to 8 bit; and the arrangement potion B0 is bit positions 7 bit to 0 bit.

Operations are explained hereinafter under these assumptions. The buffer memory address in the first loop starts from the address 0, is incremented by two words, i.e., to the address 2, 4. Then, when the address becomes the address 6, the next address becomes the address 1. After that, the address is incremented by two words, i.e., to the address 3, 5. Then, when the address becomes the address 7, the CRC calculation is finished.

The buffer memory address in the second loop starts from the address 1, is incremented by two words, i.e., to the address 3, 5. Then, when the address becomes the address 7, the next address is set to the address 0. After that, the address is incremented by two words, i.e., to the address 2, 4. Then, when the address becomes the address 6, the CRC calculation is finished.

Accordingly, the buffer memory address in the first loop changes in the order of addresses 0, 2, 4, 6, 1, 3, 5, 7, and the buffer memory address in the second loop changes in the order of addresses 1, 3, 5, 7, 0, 2, 4, 6.

Meanwhile, the data arrangement positions in the first loop is in the form of B2, B3, B0, B1, and the data arrangement positions in the second loop is in the form of B3, B1, B2, B0.

Accordingly, in accordance with the above-described combinations, the arrangement positions of calculation data in the first loop of the CRC calculation are expressed as byte data:
D2, D3, D0, D 1, D10, D11, D8, D9, D 18, D 19, D16, D 17, D26, D27, D24, D25, D6, D7, D4, D5, D14, D15, D12, D13, D22, D23, D20, D21, D30, D31, D28, D29.

Further, the arrangement positions of calculation data in the second loop of the CRC calculation are expressed as byte data:
D7, D5, D6, D4, D15, D13, D14, D12, D23, D21, D22, D20, D31, D29, D30, D28, D3, D1, D2, D0, D11, D9, D10, D8, D19, D17, D18, D16, D27, D25, D26, D24.

In the specific example described above, since the arrangements of the data to be calculated are different between CRC calculation in the first loop and CRC calculation in the second loop, the calculation results are also different. Meanwhile, the CRC calculation in the first loop and the CRC calculation in the second loop are different only in their calculation order, and thus their objects on which the CRC calculation is performed (byte data D0 to D31) are the same as each other. Therefore, even if tampering is attempted by manipulating a part of the program (bit length of the generator polynomial) so that the CRC calculation result in the first loop matches, the CRC calculation result in the second loop does not match. Therefore, whether tampering has been made on the data or not can be detected most of the time. Even if the generator polynomial is leaked out and a part of the program (bit length of the generator polynomial) is thereby tampered, the tampering can be detected most of the time. Therefore, it is impossible to get around program verification in accordance with this exemplary embodiment of the present invention by illegal manipulation. Further, in the address generation to read out data from the buffer memory 120, a plurality of combinations can be easily created by setting the start address, the end address, and the address update procedure to different values.

In accordance with this exemplary embodiment of the present invention having a structure like this, the following advantageous effects can be achieved.
(1) As a first advantageous effect, even if the generator polynomial is leaked out and a part of the program (bit length of the generator polynomial) is thereby tampered, program verification in accordance with this exemplary embodiment can detect such illegal conduct most of the time. That is, it can make a type of tampering, which is made by manipulating a part of the program (bit length of the generator polynomial) base on the leaked-out generator polynomial, substantially impossible. This is because it can be configured such that the CRC calculation results are different between a CRC calculation result in the first loop and a CRC calculation result in the subsequent loop(s) because of the difference in the calculation order, and that a correlation exists among each CRC calculation result because the CRC calculation is performed on the same object.
(2) As a second advantageous effect, the combination for the address generation to read out data from the buffer memory can be easily changed. This is because a plurality of combinations can be created by setting the start address, the end address, and the address update procedure to different values.
(3) As a third advantageous effect, the arrangement positions of data read out from the buffer memory 120 can be easily changed. This is because when the arrangement positions of data are to be changed, the setting can be made by using various data units from a multiple-byte unit to a bit unit.
(4) As a fourth advantageous effect, even if the calculation order is leaked out, the calculation order and the number of calculations can be easily changed. This is because the calculation order and the number of calculations are not fixed by means of hardware, so that they can be set even from an external device.

Note that the present invention is not limited to the above-described exemplary embodiments, and various modifications can be made without departing from the spirit and scope of the present invention. With regard to the unit of data with which the process is performed, although examples in which the data arrangement positions are changed on a one-byte basis are shown, needless to say, units of any given number of bits can be used. Similarly, the loop set number, the data arrangement order, and other parameters are also not limited to the above-described specific examples.

The control unit may include a CPU (Central Processing Unit) that executes control processing, arithmetic processing, and the like, a ROM (Read Only Memory) that stores a control program, a calculation program, and the like that are executed by the CPU, a RAM (Random Access Memory) that temporarily stores processing data and the like, and the like. With these components, the control unit may function as the loop number logic and the calculation order logic by a predetermined program, and causes each of the steps explained with the above-described exemplary embodiments to be preformed.

Although examples of a smart card in which a security data storage (memory) is embedded are shown as a program verification apparatus in the above-described exemplary embodiments and specific examples, the present invention is not limited to such smart cards (memory cards and IC cards) in which a security data storage (memory) is embedded. That is, regardless of presence/absence of the security data storage (memory), a program verification apparatus in accordance with an exemplary aspect of the present invention is broadly applicable to apparatus that perform program verification.

Further, although examples in which when program data is to be stored in the security data storage, a first checksum value that is obtained by performing CRC calculation on the program data is compared with a second checksum value that is obtained by performing CRC calculation on the program data transferred to the security data storage in order to perform program verification based on their matching/un-matching are shown in the above-described exemplary embodiments and specific examples, the comparison method of CRC calculation results is not limited to this method. For example, instead of obtaining a first checksum value, a pre-calculated check code (expected value) may be prepared. Then, a second checksum value may be compared with this check code.

Although the above-described exemplary embodiments are shown on the assumption that the buffer memory that temporarily retains program data and the register that temporarily retains a CRC calculation result (CRC register) are separate circuits, a program verification apparatus in accordance with an exemplary aspect of the present invention may include a data retention circuit that serves as a combined unit of these function units and retains necessary data for the program verification.

While the invention has been described in terms of several exemplary embodiments, those skilled in the art will recognize that the invention can be practiced with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

## Claims

1. A program verification apparatus that performs program verification by performing CRC calculation, comprising:
a loop number logic that causes the CRC calculation to be performed at least twice and determines a number of its loops; and
a calculation order logic that changes calculation order of CRC calculation for each loop of the CRC calculation.

2. The program verification apparatus according to Claim 1, wherein the loop number logic comprises:
a loop number counter that counts a number of loops of the CRC calculation;
a loop number setting portion that holds a parameter indicating a predetermined number of loops of CRC calculation; and
a loop number determination circuit that determines whether a number of loops has reached a predetermined number.

3. The program verification apparatus according to Claim 1 or 2, wherein the calculation order logic comprises a data arrangement position change circuit that changes data arrangement order for each loop.

4. The program verification apparatus according to any one of Claims 1 to 3, further comprising a data retention circuit that retains data in program verification,
wherein the calculation order logic comprises an address generation circuit that changes a read address from the data retention circuit for each loop.

5. The program verification apparatus according to Claim 4, wherein the address generation circuit changes at least one of a start address, an end address, and an update procedure for each loop.

6. A program verification method of performing program verification by performing CRC calculation, comprising:
causing the CRC calculation to be performed at least twice;
determining a number of loops of the CRC calculation; and
changing calculation order of CRC calculation for each loop of the CRC calculation.

7. The program verification method according to Claim 6, wherein the changing calculation order of CRC calculation for each loop of the CRC calculation comprises:
generating a read address for a data retention circuit for each loop, the data retention circuit being configured to retain data in program verification; and
changing an arrangement position of data read out from the data retention circuit for each loop.
